# DEMANDE DE BREVET EUROPEEN

(11) **EP 3 496 407 A1**
(43) Date de publication de la demande: **12.06.2019**
(21) Numéro de dépôt: 18209094.4
(22) Date de dépôt: 29.11.2018
(51) Int. Cl.: H04N 21/2343, H04N 21/443

(54) **PROCÉDÉ DE GESTION DE LA CONSOMMATION ÉLECTRIQUE D'UN DISPOSITIF ÉLECTRONIQUE**

(30) Priorité: 05.12.2017 FR 1761620
(71) Demandeur: Orange, 75015 Paris (FR)
(72) Inventeur: LEDUBY, Jean-Bernard, 92326 Châtillon (FR); CONAN, Martin, 92326 CHâtillon (FR)

(57) **Abrégé**

L'invention se rapporte à un procédé de gestion de la consommation d'un dispositif de traitement (5) de contenus multimédia.

Le procédé comporte les étapes suivantes sur le dispositif de traitement (5) :
- réception (S1) d'une requête (REQ) pour traiter un contenu multimédia (C) ;
- analyse (S1) de la requête pour en extraire au moins une qualité de restitution (NQ) dudit contenu (MPEG4@4Mb) ;
- obtention (S2) d'un état d'alimentation du dispositif ;
- vérification (S3) de l'adéquation entre ladite qualité du contenu et l'état d'alimentation du dispositif ;
- en fonction des résultats de la vérification, modification (S5, S6) de la qualité de restitution (NQ') pour ledit contenu (MPEG4@1Mb)
- traitement (S7) du contenu multimédia pour le restituer dans ladite qualité.

## Description

### Domaine technique

L'invention se rapporte à un système et procédé de gestion de la consommation électrique d'un dispositif électronique.

L'invention s'applique à tout dispositif disposant d'une source d'alimentation électrique. Elle s'adresse en particulier aux dispositifs multimédia.

### Etat de la technique

La consommation d'énergie électrique d'un dispositif électronique (décodeur vidéo, smartphone, etc.) est généralement fonction des modules et/ou applications utilisés à un instant donné sur un tel dispositif. La consommation électrique d'un décodeur multimédia peut par exemple varier en fonction du type et de la résolution du contenu multimédia décodé, de ses besoins en émission/réception sur un réseau, du type de calculs qu'il doit effectuer, etc.

Un utilisateur d'un tel dispositif ne peut donc pas savoir *a priori* si les ressources électriques de son dispositif, notamment le type, la puissance et éventuellement la durée d'alimentation, sont suffisantes pour le traitement requis.

Ainsi le dispositif va-t-il échouer à rendre l'application attendue si la batterie n'est pas suffisamment chargée ou si le dispositif n'est pas branché correctement ; notamment, il peut ne pas restituer le contenu, ou le restituer de manière incorrecte, ou encore s'arrêter en cours de visualisation du contenu.

L'invention offre une solution ne présentant pas les inconvénients de l'état de la technique.

### L'invention

A cet effet, selon un aspect fonctionnel, l'invention a pour objet un procédé de gestion de la consommation d'un dispositif de traitement de contenus multimédia, ledit procédé étant caractérisé en ce qu'il comporte sur le dispositif de traitement les étapes de :
- réception d'une requête pour traiter un contenu multimédia ;
- analyse de la requête pour en extraire au moins une qualité de restitution dudit contenu ;
- obtention d'un état d'alimentation du dispositif ;
- vérification de l'adéquation entre ladite qualité du contenu et l'état d'alimentation du dispositif ;
- en fonction des résultats de la vérification, modification de la qualité de restitution pour ledit contenu ;
- traitement du contenu multimédia pour le restituer dans ladite qualité.

Par contenu multimédia, on entend un contenu pouvant contenir un ou plusieurs médias (audio, vidéo, graphique, texte, son, etc.) auxquels sont associées des caractéristiques de média (résolution spatiale ou temporelle, débit, fréquence, échantillonnage, type de codage, format de codage, etc.).

Par qualité de restitution du contenu multimédia, on entend une certaine résolution du contenu numérique (résolution spatiale, temporelle, niveau de qualité associée à la compression vidéo et/ou audio) avec un certain débit Classiquement, différentes qualités peuvent être encodées pour le même contenu d'une chaîne, correspondant par exemple à différents débits. Par exemple dans un contexte de streaming adaptatif, un contenu est proposé en segments (ou fragments) temporels de différents niveaux de qualité. Une qualité correspond donc à un certain niveau proposé. Une qualité correspond pour le dispositif à un certain niveau de complexité de traitement (acquisition, décodage, etc.) En fonction de cette qualité, on a donc besoin de plus ou moins de puissance, donc d'alimentation en énergie.

Par traitement du contenu multimédia on entend son acquisition et son décodage en vue de sa restitution. La restitution peut être visuelle (affichage) ou sonore, etc. Elle peut être effectuée sur le dispositif de traitement ou sur un dispositif extérieur.

Par état d'alimentation du dispositif, on entend le type de l'alimentation (secteur, batterie, série, etc.) et/ou sa puissance disponible (puissance de charge série/secteur, charge restante de la batterie ou de tout autre type d'alimentation de durée finie, etc.)

L'invention offre ainsi l'avantage de pouvoir adapter automatiquement la qualité du contenu, et donc la complexité liée à son traitement, à l'alimentation du dispositif. En effet, si la complexité liée au traitement du contenu est trop élevée, certains types d'alimentation peuvent ne pas être adéquats (batterie insuffisante, chargement USB de puissance trop limitée, branchement secteur insuffisant, etc.) Dans un tel cas, le procédé selon l'invention sélectionne un contenu de caractéristiques différentes, donc de qualité différente, généralement de manière à ce qu'il puisse être traité avec une complexité correspondant à l'alimentation disponible. Avantageusement, l'utilisateur pourra ainsi bénéficier du contenu quel que soit le mode et l'état d'alimentation du dispositif.

Selon un mode de mise en oeuvre particulier de l'invention, un procédé tel que décrit ci-dessus est caractérisé en ce que le dispositif est alimenté par une alimentation de durée finie et en ce qu'il comporte en outre les étapes suivantes sur le dispositif :
- obtention de la durée souhaitée de restitution du contenu ;
- obtention de la charge résiduelle de l'alimentation ;
- calcul de la durée possible de restitution en fonction de la charge résiduelle de l'alimentation et de la qualité du contenu ;
- comparaison de la durée possible de restitution et de la durée souhaitée de restitution
et en ce que
- la nouvelle qualité de restitution dudit contenu est calculée de manière à ce que la durée possible de restitution soit au moins égale à la durée souhaitée de restitution.

Par alimentation de durée finie, on entend une alimentation dont la durée est limitée dans le temps, et donc la puissance totale, ou charge de restitution, également limitée, par opposition à une alimentation de durée illimitée, comme par exemple un branchement secteur qui n'est pas limité en temps, ni par conséquent en puissance totale. Il peut s'agit typiquement d'une batterie ou encore d'une alimentation limitée dans le temps pour des besoins applicatifs (contrôle parental, accès paramétrable des applications à la consommation électrique sur un dispositif de type smartphone, etc.)

Ce mode de réalisation de l'invention offre ainsi l'avantage de pouvoir adapter automatiquement la qualité/complexité du contenu à une alimentation de durée finie du dispositif, de manière à restituer un contenu dans son intégralité. En effet, si la durée possible de restitution calculée en fonction de la charge résiduelle de la batterie est inférieure à la durée souhaitée de restitution, le procédé selon l'invention sélectionne un contenu de caractéristiques différentes, de manière à ce qu'il puisse être joué jusqu'au bout sans interruption. Avantageusement, l'utilisateur pourra ainsi bénéficier de l'intégralité du contenu.

Selon un deuxième mode de mise en oeuvre particulier de l'invention, qui pourra être mis en oeuvre alternativement ou cumulativement avec le précédent, un tel procédé est caractérisé en ce que la qualité de restitution du contenu est liée à une caractéristique de codage, de débit ou de résolution.

Ce mode de mise en oeuvre de l'invention permet de sélectionner une nouvelle qualité pour le contenu selon l'un ou plusieurs critères relatifs au dit contenu ; en effet plusieurs critères peuvent influer sur la complexité du décodage du contenu et donc sur la puissance nécessaire au décodage.

Selon un autre mode de mise en oeuvre particulier de l'invention, qui pourra être mis en oeuvre alternativement ou cumulativement avec les précédents, un tel procédé est caractérisé en ce que la requête est une requête de téléchargement progressif d'un contenu multimédia décrit dans un fichier de description proposant au moins deux niveaux de qualité pour le contenu, et en ce que l'étape de modification de la qualité de restitution dudit contenu comporte une sous-étape de sélection d'un niveau de qualité dans ledit fichier de description.

Avantageusement, ce mode de mise en oeuvre de l'invention permet d'utiliser les mécanismes mis à disposition par les techniques de *streaming* adaptatif. Pour accéder à un contenu multimédia en streaming sur un réseau, il existe plusieurs solutions techniques, comme par exemple les solutions propriétaires Microsoft Smooth Streaming, Apple HLS, Adobe Http Dynamic Streaming ou encore la norme MPEG-DASH de l'organisme ISO/IEC qui sera décrite ci-après. Le terminal client effectue généralement une requête en deux étapes : une première étape consiste à télécharger un document décrivant les paramètres d'accès au service via le protocole HTTP (de l'anglais Hyper Text Transport Protocol), un protocole de communication client-serveur développé pour les réseaux Internet et en particulier le Web. Ce document contient un ensemble d'informations descriptives du contenu accessible à une certaine adresse sur un serveur de contenus. Dans la suite, on y réfèrera sous l'expression « fichier de description » et on suppose dans un but de simplification qu'il se trouve sur le même serveur (3) que le contenu. Classiquement, ce fichier « expose » différents flux pour la même vidéo, correspondant par exemple à différents débits, différentes résolutions, différentes qualités. L'utilisation d'un tel fichier permet avantageusement d'accéder rapidement à la sélection d'un contenu dont la qualité est adaptée à l'alimentation. Lors d'une seconde étape, le terminal client accède au contenu sur le serveur et le service démarre effectivement, c'est-à-dire que le terminal client peut recevoir et afficher le contenu.

Selon une variante de ce mode de mise en oeuvre, un tel procédé est caractérisé en ce que qu'il comporte en outre une étape d'inscription d'un niveau de complexité dans ledit fichier de description.

Avantageusement, cette variante de l'invention permet de compléter le fichier de description par l'inscription d'une complexité associée à un niveau de qualité. Ainsi, une étape ultérieure de sélection d'un contenu permettra au procédé selon l'invention de connaître rapidement le niveau de complexité requis pour un niveau donné, et donc sélectionner plus rapidement le niveau le plus approprié parmi plusieurs possibles.

Selon une autre variante de ce mode de mise en oeuvre, qui pourra être mise en oeuvre alternativement avec la précédente, un tel procédé est caractérisé en ce qu'il comporte en outre une étape d'inscription d'une durée de charge dans ledit fichier de description.

Avantageusement, cette variante de l'invention permet de compléter le fichier de description par l'inscription d'une durée d'alimentation (par exemple la durée de charge restante d'une batterie) nécessaire pour un niveau de qualité. Ainsi, une étape ultérieure de sélection d'un contenu permettra au procédé selon l'invention de connaître rapidement la durée requise pour un niveau donné, et donc sélectionner plus rapidement le niveau le plus approprié parmi plusieurs possibles.

Selon un autre mode de mise en oeuvre particulier de l'invention, qui pourra être mis en oeuvre alternativement ou cumulativement avec les précédents, un tel procédé est caractérisé en ce qu'il comporte les étapes suivantes sur le dispositif :
- obtention d'une structure de donnée représentative des besoins en alimentation du dispositif ;
- lecture dans ladite structure d'au moins un état d'alimentation requis pour ladite au moins une qualité de contenu requise ;
- comparaison de l'état d'alimentation du dispositif avec ledit au moins un état d'alimentation requis.

Avantageusement selon ce mode, le dispositif accède très simplement à l'état d'alimentation nécessaire pour la qualité requise, par la lecture d'une structure de données en mémoire. Cette structure de données peut être une table, un fichier, etc. en mémoire du dispositif. Elle comporte une correspondance entre les qualités qui peuvent être choisies pour un contenu et l'état d'alimentation requis correspondant.

Selon un autre mode de mise en oeuvre particulier de l'invention, qui pourra être mis en oeuvre alternativement ou cumulativement avec les précédents, un tel procédé est caractérisé en ce l'étape de modification de la qualité de restitution dudit contenu est suivie de l'émission d'un message relatif à la qualité du contenu.

Avantageusement selon ce mode, un terminal qui a émis la requête vers le dispositif de traitement (par exemple, un *smartphone* émettant une requête de chargement de contenu vers une clé TV ou une STB) recevra en retour le message l'informant de la nouvelle qualité sélectionnée pour le contenu. Comme il s'agit généralement du terminal de l'utilisateur, il sera à même de savoir rapidement si la qualité sélectionnée pour le contenu est conforme à ses souhaits. Alternativement, c'est le terminal d'affichage du contenu, relié au dispositif de traitement (par exemple, un *TV* restituant le contenu *streamé* par une clé TV) qui recevra le message l'informant la nouvelle qualité.

Selon un aspect matériel, l'invention concerne également un dispositif de traitement apte à traiter des contenus multimédia, comportant :
- un module de réception d'une requête pour traiter un contenu multimédia ;
- un module d'analyse de la requête pour en extraire au moins une qualité de restitution dudit contenu ;
- un module d'obtention d'un état d'alimentation du dispositif ;
- un module de vérification de l'adéquation entre ladite au moins une qualité du contenu et l'état d'alimentation du dispositif ;
- en fonction des résultats de la vérification, un module de modification de la qualité de restitution pour ledit contenu ;
- un module de traitement du contenu multimédia pour le restituer dans ladite qualité.

Le terme module peut correspondre aussi bien à un composant logiciel qu'à un composant matériel ou un ensemble de composants matériels et logiciels, un composant logiciel correspondant lui-même à un ou plusieurs programmes ou sous-programmes d'ordinateur ou de manière plus générale à tout élément d'un programme apte à mettre en oeuvre une fonction ou un ensemble de fonctions telles que décrites pour les modules concernés. De la même manière, un composant matériel correspond à tout élément d'un ensemble matériel (ou hardware) apte à mettre en oeuvre une fonction ou un ensemble de fonctions pour le module concerné (circuit intégré, carte à puce, carte à mémoire, etc.).

Selon un autre aspect matériel, l'invention concerne également un décodeur numérique comprenant un tel dispositif de traitement.

Selon un autre aspect matériel, l'invention concerne également un programme d'ordinateur apte à être mis en oeuvre dans un dispositif de traitement tel que défini ci-dessus, le programme comprenant des instructions de code qui, lorsque le programme est exécuté par un processeur, réalise les étapes du procédé de gestion décrit ci-dessus.

Les objets selon ces aspects matériels de l'invention procurent au moins les mêmes avantages que ceux procurés par le procédé selon le premier aspect. Les caractéristiques optionnelles évoquées pour le premier aspect peuvent s'appliquer en termes de procédé.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

Selon encore un autre aspect matériel, l'invention a trait à un support d'enregistrement lisible par un processeur de données sur lequel est enregistré un programme comprenant des instructions de code de programme pour l'exécution des étapes du procédé défini ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette ou un disque dur. D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet. Alternativement, le support d'informations peut être un circuit intégré dans lequel le programme est incorporé, le circuit étant adapté pour exécuter ou pour être utilisé dans l'exécution du procédé en question.

L'invention sera mieux comprise à la lecture de la description qui suit, donnée à titre d'exemple et faite en référence aux dessins annexés.

### Les figures:

La figure 1 représente un mode de réalisation de l'invention dans lequel le dispositif de traitement est un décodeur numérique.
La figure 2 représente une architecture matérielle d'un tel dispositif selon un mode de réalisation de l'invention.
La figure 3 représente un algorithme d'ajustement des paramètres de qualité du contenu en fonction de l'état de l'alimentation du dispositif, selon un mode de réalisation de l'invention.

### Description détaillée d'un exemple de réalisation illustrant l'invention

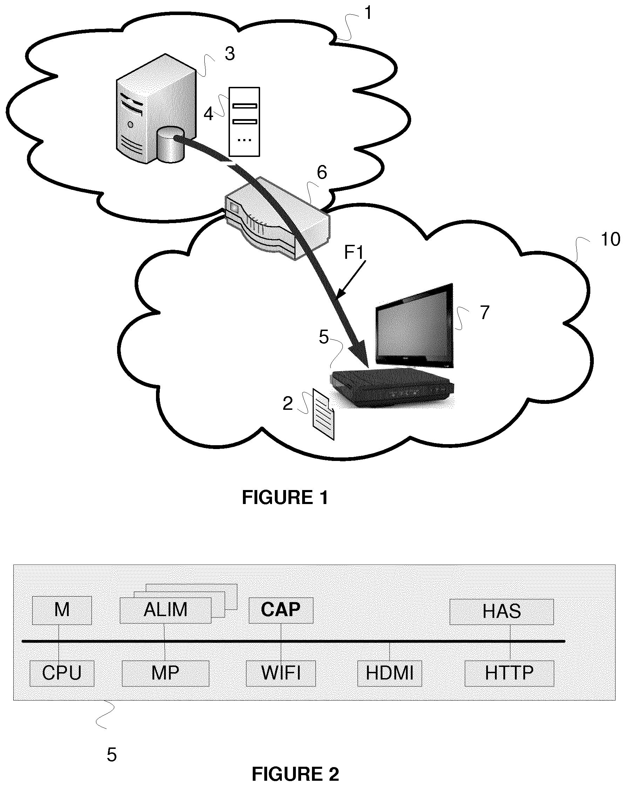

La figure 1 représente un mode de réalisation de l'invention dans lequel le dispositif de traitement (5) est un décodeur numérique souhaitant accéder à un contenu multimédia en mode de streaming adaptatif.

Le décodeur numérique est fourni à titre d'exemple. Il peut prendre la forme d'un décodeur de salon (STB), d'un décodeur portatif ou d'une clé TV, c'est-à-dire un dispositif de streaming portatif. Il peut aussi prendre la forme d'un dispositif apte à traiter (décoder, restituer, etc.) un contenu multimédia, par exemple un smartphone ou une tablette électronique.

Selon cet exemple, le dispositif est dans un réseau local (10) connecté au réseau étendu (WAN, 1) via une passerelle de service (6) assurant la redirection, ou routage, des paquets de données entre les différents terminaux et les réseaux qui lui sont connectés. Un tel réseau local connecte souvent les différents terminaux en utilisant une technologie sans fils (WiFi) ou filaire. Par la suite, on entend par dispositif de traitement un terminal apte à se connecter avec ou sans fils à la passerelle (6) pour traiter un contenu multimédia. Le contexte du réseau local domestique (10) est donné à titre d'exemple et pourrait être transposé aisément à celui d'un réseau d'entreprise.

Le réseau local (10) selon ce mode de réalisation de l'invention comprend le dispositif de traitement (5) et un dispositif de restitution (7), ou plus simplement téléviseur (TV), associé au décodeur (5) connecté au réseau local (10) via la passerelle de service (6) chargée de télécharger les contenus sur le réseau WAN (1). Le réseau (10) est par exemple un réseau local IP (Internet Protocol) et le réseau WAN (1) est également de type IP et contient des serveurs (3) de contenus multimédia qui hébergent notamment des contenus numériques pour une mise à disposition des terminaux du réseau local (10) en mode de *streaming.* Le serveur de contenus (3) se trouve selon cet exemple dans le WAN (1) mais il pourrait, selon un autre exemple, être situé dans un réseau local, par exemple au niveau de la passerelle de service (6) ou de tout autre équipement capable d'héberger un tel serveur de contenus.

Le dispositif de traitement selon ce mode de réalisation de l'invention peut être alimenté selon plusieurs modes : par une alimentation série (USB), par une batterie (BATT) ou par une alimentation secteur (SEC). D'autres types d'alimentation seraient bien sûr envisageables sans sortir du cadre de l'invention.

Le décodeur est adapté pour recevoir ces contenus numériques sous forme de données multimédia et pour en faire une restitution. Cette restitution consiste à fournir au niveau du TV le contenu numérique sous une forme accessible à l'utilisateur. Par exemple, des données reçues correspondant à une vidéo sont généralement décodées, puis restituées au niveau du TV sous la forme d'un affichage, ou visualisation, de la vidéo correspondante avec sa bande-son associée. Dans la suite, on assimilera le contenu numérique à une vidéo et la restitution par le décodeur à une visualisation sur l'écran du TV.

Le contenu peut être par exemple choisi par un utilisateur sur un terminal (non représenté), par exemple un *smartphone* ou une tablette électronique, apte à transmettre au décodeur un ordre de téléchargement, comprenant une adresse de téléchargement à destination du serveur de contenus (3). L'utilisateur choisit par ce biais de recevoir le contenu (C) en *streaming.* Le décodeur (5) émet alors une requête à destination d'un serveur (3), en indiquant le contenu choisi et il reçoit en retour un flux de données numériques relatives à ce contenu. Un tel contenu peut être typiquement un film, une vidéo, une chaîne de contenus, ou de manière plus générale tout type de contenu numérique qui peut être transmis dans le réseau considéré. Sur la figure 1, la flèche pleine (F1) représente le chemin d'un contenu depuis le serveur de contenus (3) jusqu'au décodeur (5).

Pour accéder au contenu multimédia en streaming sur un réseau, le décodeur utilise selon cet exemple une solution basée sur la norme MPEG-DASH. Un exemple de tel fichier de description, un fichier *manifest* (en abrégé MPD) inspiré de cette norme, est fourni en annexe 1. Pour plus de détails on pourra se référer à la version la plus récente de la norme ISO/IEC 23009-1.Ce fichier *manifest* simplifié décrit des contenus numériques dans une syntaxe XML (de l'Anglais « eXtended Markup Language»), comprenant une liste de contenus sous forme de fragments classiquement décrits entre une balise ouvrante (< >) et une balise fermante </ >. Chaque fragment correspond à une certaine durée avec plusieurs niveaux de qualité. Les balises suivantes ont un intérêt particulier pour ce mode de réalisation de l'invention :
∘ *Period duration* indique la durée (et éventuellement le début) d'un contenu ;
∘ *Adaptation Set* contient la description d'un flux multimédia (par exemple, toute la vidéo, une partie de la vidéo, l'audio dans une certaine langue, les sous-titres, etc.) ; dans l'exemple,
   ∘ le premier *Adaptation Set* décrit la vidéo du contenu au format de codage MPEG4 et aux résolutions standard (SD) à 1 Mbit/s et 720p à 3,2 Mbits/s.
   ∘ le second décrit la vidéo au format de codage HEVC et à la résolution HD (1080p) à 10 Mbit/s.
∘ *BaseURL* indique une adresse pour accéder au contenu via une URL (Uniform Resource Locator), à différents niveaux de la hiérarchie du fichier MPD. Dans l'exemple ces balises indiquent respectivement l'adresse du serveur de contenus 3 (http://server.com) puis l'adresse des flux, encodés au format MPEG4 (video/h264) et/ou au format HEVC (video/h265) ;
∘ *SegmentList* liste les parties complémentaires des adresses des différents fragments :
   - « C_SD_1000k_h264_1.m4s » pour le premier fragment du contenu « C » à 1000 kilobits par seconde (« kb »), au format 640x480 (SD)
   - « C_SD_1000k_h264_2.m4s » pour le second fragment,
   - etc.

Une fois qu'il dispose de ces adresses de fragments, le terminal peut procéder à l'obtention des fragments de contenu multimédia via un téléchargement à ces adresses. Par exemple, l'adresse composée correspondant au contenu C à la résolution et au débit le plus faible est de type MPEG4 à l'adresse :
*http:*//*server.com*/*video*/*h264*/*C_SD_1000k_h264(_X).m4s.*

Selon cet exemple, la génération des adresses se fait sur le dispositif électronique lui-même ; naturellement cette variante suppose que le dispositif de traitement dispose des moyens matériels et logiciels suffisants pour accéder au fichier *manifest,* l'analyser et générer l'adresse correcte correspondant à la commande reçue.

Selon ce mode de réalisation, le fichier MPD comporte par ailleurs des balises supplémentaires dans une structure *Complex,* indicatrices de la complexité d'un contenu à traiter :
∘ *level* indique le niveau de complexité liée au traitement d'un contenu, par exemple sur une échelle croissante de 1 à 10. Cette indication permet au dispositif selon l'invention de sélectionner plus facilement un contenu dans le fichier MPD, en cas notamment de ressources limitées en alimentation : s'il ne dispose que d'une alimentation USB, un contenu de complexité 8 (élevée) peut être inadéquat. Le dispositif devra dans ce cas se rabattre sur un contenu de moindre complexité.
∘ *%Batt* indique le pourcentage de charge de batterie nécessaire pour restituer le contenu dans cette qualité, par exemple par un chiffre sur une échelle croissante de 0 à 100, ou alternativement une durée requise ; cette indication permet au dispositif selon l'invention de sélectionner plus facilement un contenu dans le fichier MPD, en cas notamment de ressources limitées en durée d'alimentation : si la batterie n'est chargée qu'à 50% (ou disposant seulement d'une heure de charge restante), un contenu noté « 60% » (requérant 1 heure 30 de charge restante) peut être inadéquat. Le dispositif devra dans ce cas se rabattre sur un contenu de moindre complexité et/ou de moindre pourcentage de charge requise.

Naturellement, ces nouveaux champs ne sont donnés qu'à titre indicatif, de nombreuses autres possibilités étant accessibles à un homme du métier. Ces champs peuvent être renseignés par le dispositif lors de l'obtention du fichier MPD, ou plus tard en cours de fonctionnement, ou encore être inscrits par la passerelle de service qui connaît le dispositif de traitement et ses capacités, etc.

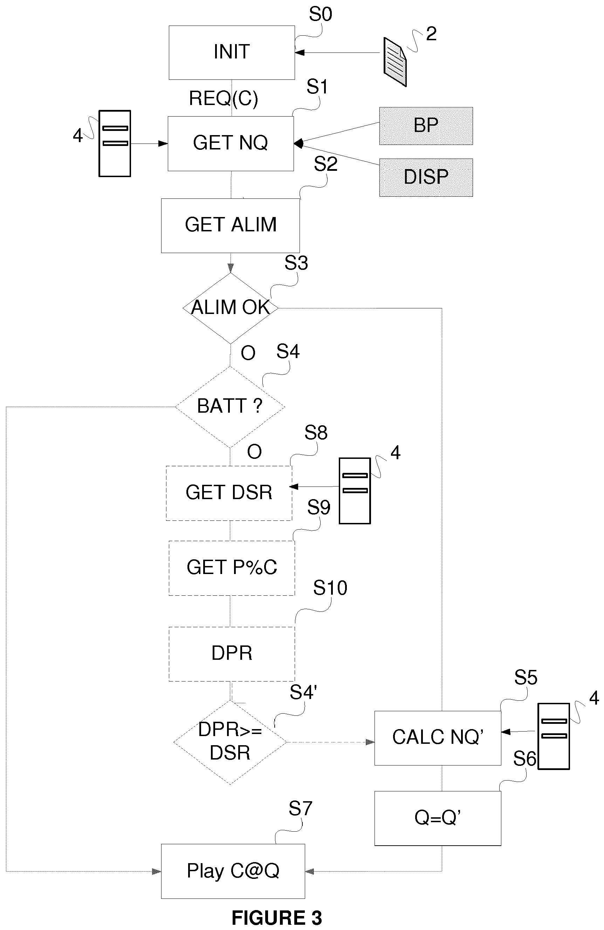

Selon l'invention, un « Fichier Alimentation », abrégé FA (2) a été préalablement installé sur le dispositif. Le module de gestion est apte à récupérer les caractéristiques de l'alimentation associée au terminal (type d'alimentation, volume de charge, état, etc.), de les inscrire dans un tel fichier, puis en fonction des caractéristiques inscrites, d'accepter ou refuser conditionnellement le service à un instant donné, selon un procédé qui sera décrit plus tard à l'appui de la figure 3.

La figure 2 représente une architecture matérielle d'un dispositif de traitement selon un mode de réalisation de l'invention.

Le dispositif comprend des mémoires M articulées autour d'un processeur CPU. Il communique avec le réseau (1) via le module de communication (HTTP) qui lui permet de se connecter au serveur de contenus. Il comporte aussi :
- un ou plusieurs modules d'alimentation ALIM (batterie, USB, secteur, etc.)
- un module d'interface (HDMI) capable de s'interfacer physiquement et logiquement avec le téléviseur (7) pour transmission du contenu multimédia (audio et vidéo) décodé et échange de commandes de base (mode silence, augmentation du volume, diminution du volume, etc.)
- un module de communication (WiFi) qui lui permet de se connecter de préférence sans fils (par exemple, mais de manière non limitative, via un canal radio de type WiFI) aux terminaux du réseau, par exemple un terminal mobile dont il reçoit les commandes de téléchargement de contenus et échange des messages avec l'utilisateur.
- un « média player » (MP) capable de restituer (recevoir, décoder, préparer) les flux en mode de *streaming* et de les délivrer au dispositif d'affichage; le « media player » comporte entre autres un ensemble de décodeurs (audio, vidéo, etc.) aptes à décoder les contenus multimédia
- un module de gestion du streaming adaptatif (HAS) apte à prendre en compte les informations contenues dans les fichiers de description pour demander un téléchargement progressif d'un contenu à l'une des qualités proposées dans le fichier de description.
- un module de gestion des capacités (CAP) selon l'invention, chargé de la gestion des capacités de l'alimentation selon le mode de réalisation décrit précédemment à l'appui de la figure 1. Ce module est notamment capable, en relation avec les modes de réalisation de l'invention :
   - d'analyser la requête pour un contenu, provenant par exemple d'un terminal de l'utilisateur, et d'en extraire une ou plusieurs qualités possibles du contenu demandé, en fonction d'autres critères comme la résolution de l'écran connecté, la bande passante disponible, etc.
   - de comparer la qualité souhaitée aux capacités effectives du dispositif en termes d'alimentation ;
   - si les capacités du dispositif sont insuffisantes, de changer de qualité du contenu ;
   - de transmettre une requête au module HAS pour *streamer* un contenu dans la nouvelle qualité calculée.
   - optionnellement de préparer un message d'alerte ou d'information à destination de l'utilisateur.

La figure 3 représente un organigramme du procédé selon un mode de réalisation de l'invention.

Lors d'une étape S0, le dispositif de traitement, selon notre exemple un décodeur multimédia, est initialisé ; selon cet exemple de réalisation, ses capacités en alimentation sont prédéfinies dans un fichier alimentation (FA), installé dans la mémoire du dispositif. Il peut s'agir d'un stockage en mémoire ROM, ou EPROM, etc.

Un exemple de contenu d'une table d'un tel fichier, qui se trouve en mémoire du dispositif, est illustré ci-dessous (Table 1) ; elle comporte :
- l'identifiant du décodeur ;
- une colonne « MEDIA » indiquant le type de média(s) d'un contenu, le type de codage (par exemple MPEG4) et la résolution (par exemple SD) supportés, et une plage de débits associés (1Mbits/s à 3Mbits/s) ; l'un ou plusieurs de ces paramètres indique une qualité du contenu. Dans la suite la qualité est notée Q= MPEG4@SD pour indiquer une qualité MPEG4 en résolution SD (le débit n'est pas pris en compte dans un but de simplification) ;
- une colonne « ALIM » comportant les modes d'alimentation possibles pour traiter une qualité de contenu donné. Les modes d'alimentation possible sont ici batterie (BATT), série (USB) ou secteur (SEC) ;
- optionnellement, dans un mode de réalisation basé sur l'utilisation de la batterie, une colonne P%C indiquant le pourcentage nécessaire de charge de la batterie pour traiter un contenu d'une durée prédéfinie. La ligne 3 indique par exemple que la batterie doit être chargée au minimum à 15% pour restituer un contenu MPEG4@SD (pendant une heure) si le dispositif est sur batterie ; cette colonne pourrait être remplacée par une colonne « complexité » dans lequel on indiquerait la complexité du contenu à traiter, par exemple sur une échelle de 1 à 10, selon la qualité, le type de codage, etc. du contenu...

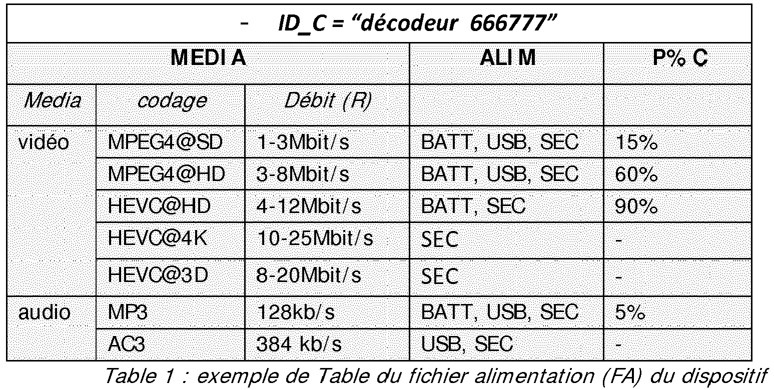

On suppose que le dispositif de traitement (via notamment son module (HAS)) dispose en entrée, ou peut accéder sur requête :
- aux caractéristiques d'affichage du téléviseur auquel il est connecté (résolution spatiale, fréquentielle, formats supportés, etc) ;
- au fichier *manifest* (MPD) décrivant le contenu requis et les niveaux associés, conformément par exemple à l'annexe 1 ; le fichier peut lui être transmis par exemple par le serveur de contenus (3), ou par la passerelle domestique (, ou par un autre terminal du réseau local, etc.
- au débit d'accès sur le réseau, ou Bande Passante (BP). Il peut notamment recevoir cette information de la passerelle de service à laquelle il est connecté, ou calculer la bande passante en fonction du débit déjà affecté aux contenus téléchargés en cours de visualisation par l'utilisateur, ou l'obtenir par toute autre technique à la portée de l'homme du métier (valeur du débit moyen de téléchargement lors de plusieurs téléchargements effectués précédemment, ou le débit immédiat mesuré en fin de téléchargement du dernier fichier, ou toute autre combinaison des temps de téléchargements mémorisés par le terminal au cours de ses précédents téléchargements, etc.).

Au cours d'une première étape S1, le dispositif reçoit une requête d'un utilisateur, par exemple en provenance de son *smartphone.* La requête comporte l'identifiant du contenu C que l'utilisateur souhaite visualiser. Connaissant la bande passante dont il peut disposer, le dispositif calcule, en prenant en compte la résolution du téléviseur (taille de l'écran, résolution, etc.), le niveau de qualité du contenu C à traiter. On notera que le contenu peut être téléchargé dans un premier temps en utilisant le débit le plus faible, notamment si l'on souhaite que la restitution débute avant la fin des étapes de l'algorithme. Selon un exemple, l'utilisateur souhaite une restitution du contenu C en haute définition (HD). Si l'on se réfère au fichier MDP donné en annexe 1, il doit donc télécharger le contenu avec la qualité Q=HEVC@1080p et le débit de 10Mbits/s à l'adresse suivante :
*http:*//*server.com*/*video*/*h265*/*C_1080p_10000k_h265(_X).m4s.*

Un test, non représenté, peut consister à vérifier que l'écran prévu pour la restitution peut supporter la résolution requise. Si ce n'est pas le cas, un autre niveau de qualité peut être choisi, par exemple celui correspondant au contenu C en MPEG4 en 720p à 3.2 Mbps (MPEG4@720p). Un tel test se situe cependant en dehors du contexte de l'invention.

Lors d'une étape S2, le module CAP du dispositif acquiert le type d'alimentation courant, selon notre exemple batterie (BATT) série (USB) ou secteur (SEC)). L'étape S2 est suivie par une étape S3 de test au cours de laquelle le type d'alimentation courant est confronté à la qualité souhaitée pour le contenu, c'est-à-dire qu'un test d'adéquation est fait entre la qualité du contenu, et donc l'énergie requise pour son décodage, et la source d'alimentation. Pour réaliser ce test, le module CAP lit le fichier d'alimentation FA. Il accède par exemple à la table 1 présentée ci-dessus. Pour décoder un contenu C en HD à ce débit et en H265, il doit disposer d'une alimentation par batterie ou secteur (voir ligne 6 de la table 1).

S'il est alimenté par liaison série USB, le test de l'étape S3 est négatif, elle est suivie de l'étape S5 au cours de laquelle un nouveau niveau de qualité NQ' est calculé pour le contenu. Selon l'exemple précédent, le contenu C peut être téléchargé à tous les niveaux qui autorisent une alimentation USB, c'est-à-dire conformément aux lignes 4 et 5 de la table 1 : en MPEG4@SD ou HD. En l'occurrence, puisque l'utilisateur a demandé une résolution HD, c'est le MPEG4@HD (720p) qui est choisi et la nouvelle qualité est affectée au contenu à l'étape S6 (Q = Q'= MPEG4@HD) avant le téléchargement de l'étape S7 selon la nouvelle qualité qui a été affectée à l'étape E6 (Q'=Q).

Un test, effectué lors de l'étape S4 suivant l'étape S3 si celle-ci indique que l'alimentation est appropriée, consiste à tester si le dispositif est alimenté par batterie. Dans l'exemple, deux cas de figure peuvent donc se présenter :
- soit il est sur secteur, et dans ce cas le test de l'étape S4 étant négatif (il n'est pas sur batterie) l'étape S4 est suivie de l'étape S7 au cours de laquelle le contenu est téléchargé, décodé et restitué avec la niveau de qualité (NQ) requise, c'est-à-dire avec la qualité HEVC@1080p à l'adresse :
   *http:*//*server.com*/*video*/*h265*/*C_1080p_10000k_h265(_X).m4s.*
- soit il est sur batterie, et dans ce cas les étapes S8, S9, S10 ET S'4 sont effectuées pour calculer une durée de contenu à restituer et adapter la qualité du contenu à la charge (restante) de la batterie.
   ∘ lors de l'étape S8, la durée effective du contenu est obtenue ; elle peut être lue dans le fichier de description 4, par exemple dans le champ < *Period duration*="PT1H12M14.16S" > du MPD (selon cet exemple la durée du contenu est de 1 heure, 12 minutes, 14.16 secondes) ; alternativement elle peut être fournie par l'utilisateur via son terminal connecté au décodeur (il peut lui signifier par exemple qu'il aimerait visualiser une heure de contenu).
   ∘ lors de l'étape S9, un pourcentage P%C de charge résiduelle de la batterie est obtenu par le module CAP. Cette information peut être obtenue par tout moyen à la portée de l'homme du métier. Par exemple, la batterie est chargée à 50% au moment du test (P%C= 50).
   ∘ lors de l'étape S9, une durée de restitution possible DPR en utilisant la charge de la batterie est calculée. Par exemple, si le contenu doit être téléchargé à la qualité Q= HEVC@HD, la dernière colonne de la table 1 indique que la batterie doit être chargée à 90% pour restituer en moyenne une heure de contenu. Comme le contenu requis dure 1 heure et 12 minutes, la charge de la batterie (50%) est insuffisante. Le test de l'étape S4' échoue puisque la durée possible de restitution est supérieure à la durée requise. Un calcul d'un nouveau niveau de qualité doit être effectué à l'étape S5 comme décrit ci-dessus, en s'appuyant sur le MDP et le fichier d'alimentation (FA, 2). Par exemple, la qualité MPEG4@SD pouvant être rendue avec une charge de batterie de 15% pour une heure, on en déduit simplement par une règle de proportionnalité qu'elle doit être chargée d'environ 20% pour restituer le contenu C de 1 heure et 12 minutes. Donc la charge courante de la batterie est suffisante pour cette qualité. La qualité Q'=MPEG4@SD peut donc être téléchargée au cours de l'étape S7.

Selon des variantes, un niveau de complexité ou une indication de charge de batterie peut être inscrit à l'issue de cette étape soit dans le fichier manifest (Annexe 1, balise *Complex*), soit dans le fichier FA (Table 1, dernière colonne).

Il va de soi que le mode de réalisation qui a été décrit ci-dessus a été donné à titre purement indicatif et nullement limitatif, et que de nombreuses modifications peuvent être facilement apportées par l'homme de l'art sans pour autant sortir du cadre de l'invention.

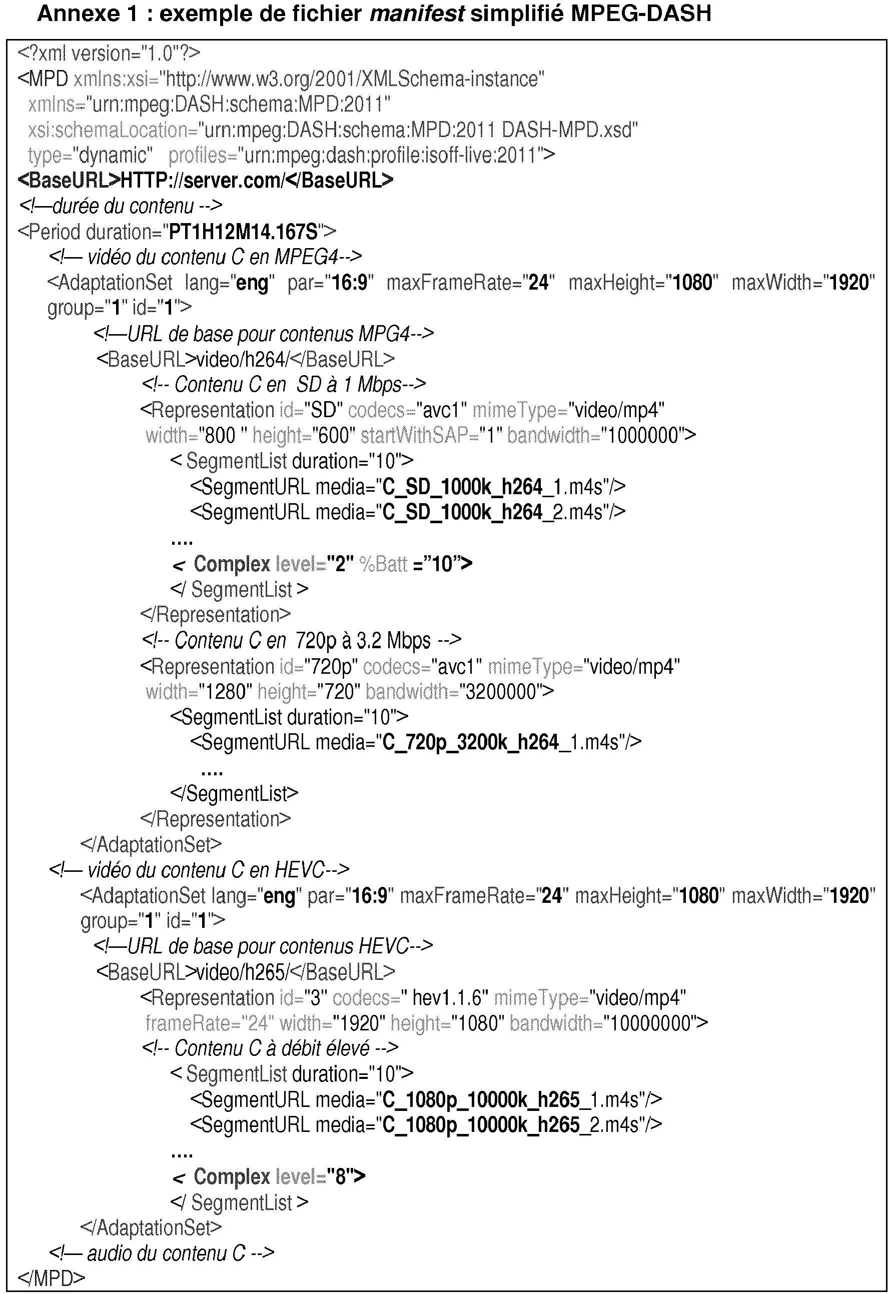

## Revendications

1. Procédé de gestion de la consommation d'un dispositif de traitement (5) de contenus multimédia ayant un type d'alimentation, ledit procédé étant **caractérisé en ce qu'**il comporte sur le dispositif de traitement (5) les étapes de :
- réception (S1) d'une requête (REQ) pour traiter un contenu multimédia (C), ladite requête comprenant une qualité de restitution (NQ) dudit contenu (MPEG4@4Mb) ;
- modification (S5, S6) de la qualité de restitution (NQ') pour ledit contenu (MPEG4@1Mb) lorsque ladite qualité de restitution requise n'est pas en adéquation avec le type d'alimentation du dispositif ;
- traitement (S7) du contenu multimédia pour le restituer dans ladite qualité.

2. Procédé de gestion selon la revendication 1, dans lequel le type d'alimentation est de durée finie, et le procédé comporte en outre les étapes de :
- obtention (S2) d'un état d'alimentation du dispositif ;
- vérification (S3) de l'adéquation entre ladite qualité du contenu et l'état d'alimentation du dispositif ;

3. Procédé de gestion selon la revendication 1, **caractérisé en ce que** le dispositif est alimenté par une alimentation de durée finie et **en ce qu'**il comporte les étapes suivantes sur le dispositif :
- obtention (S8) de la durée souhaitée de restitution du contenu (DSR) ;
- obtention (S9) de la charge résiduelle de l'alimentation ;
- calcul (S10) de la durée possible de restitution (DPR) en fonction de la charge résiduelle de l'alimentation et de la qualité (Q) du contenu ;
- comparaison (S'4) de la durée possible de restitution (DPR) et de la durée souhaitée (DSR) de restitution.
et **en ce que**
- la nouvelle qualité de restitution dudit contenu (NQ') est calculée (S5) de manière à ce que la durée possible de restitution (DPR) soit au moins égale à la durée souhaitée de restitution (DSR<= DSR).

4. Procédé de gestion selon la revendication 1, **caractérisé en ce que** la qualité de restitution du contenu est liée à une caractéristique de codage, de débit ou de résolution.

5. Procédé de gestion selon la revendication 1, **caractérisé en ce que** la requête est une requête de téléchargement progressif d'un contenu multimédia décrit dans un fichier de description (4, MPD) proposant au moins deux niveaux de qualité pour le contenu, et **en ce que** l'étape (S5) de modification de la qualité (NQ') de restitution dudit contenu comporte une sous-étape de sélection d'un niveau de qualité dans ledit fichier de description (MPD).

6. Procédé de gestion selon la revendication 5, **caractérisé en ce qu'**il comporte en outre une étape d'inscription d'un niveau de complexité (*Level*) dans ledit fichier de description (MPD).

7. Procédé de gestion selon la revendication 5, **caractérisé en ce qu'**il comporte en outre une étape d'inscription d'une durée de charge *(%Batt*) dans ledit fichier de description (MPD).

8. Procédé de gestion selon la revendication 1, **caractérisé en ce que** l'adéquation entre ladite qualité du contenu et le type d'alimentation du dispositif est vérifiée par les sous-étapes suivantes sur le dispositif :
- obtention d'une structure de donnée (FA, 2, Table 1) représentative des besoins en alimentation du dispositif ;
- lecture dans ladite structure (FA, 2, Table 1) d'au moins un type d'alimentation requis (BATT, SEC) pour ladite au moins une qualité de contenu requise ;
- comparaison du type d'alimentation du dispositif avec ledit au moins un type d'alimentation requis.

9. Procédé de gestion selon la revendication 1, **caractérisé en ce que** l'étape (S5) de modification de la qualité (NQ') de restitution dudit contenu est suivie de l'émission d'un message relatif à la qualité (Q, Q') du contenu.

10. Dispositif de traitement (5) apte à traiter des contenus multimedia (C), comportant :
- un module de réception (WiFI) d'une requête (REQ) pour traiter un contenu multimédia (C) ;
- un module d'analyse (CAP, HAS) de la requête pour en extraire au moins une qualité de restitution (NQ) dudit contenu (MPEG4@4Mb) ;
- un module d'obtention (CAP) d'un état d'alimentation du dispositif ;
- un module de vérification (CAP) de l'adéquation entre ladite au moins une qualité du contenu et l'état d'alimentation du dispositif ;
- en fonction des résultats de la vérification, un module de modification (CAP) de la qualité de restitution (NQ') pour ledit contenu (MPEG4@1Mb) ;
- un module de traitement (HAS, MP) du contenu multimédia pour le restituer dans ladite qualité.

11. Décodeur numérique comprenant un dispositif de traitement selon la revendication précédente.

12. Programme d'ordinateur comportant des instructions de code pour la mise en oeuvre du procédé de gestion conforme à la revendication 1, lorsque celle-ci est exécutée par un processeur.
